# EUROPÄISCHE PATENTSCHRIFT

(11) **EP 0 431 352 B1**
(45) Veröffentlichungstag und Bekanntmachung des Hinweises auf die Patenterteilung: **12.10.1994**
(21) Anmeldenummer: 90121590.5
(22) Anmeldetag: 12.11.1990
(51) Int. Cl.: G01N 35/00, B01L 11/00

(54) **Reagenzbevorratungssystem für ein medizinisches Analysegerät**
Reagent storage and supply system for clinical analyzer
Système d'alimentation en réactifs pour analyseur clinique

(30) Priorität: 21.11.1989 DE 3938559
(43) Veröffentlichungstag der Anmeldung: 12.06.1991
(73) Patentinhaber: BOEHRINGER MANNHEIM GMBH, 68298 Mannheim (DE)
(72) Erfinder: Tremmel, Ewald, W-6701 Waldsee (DE); Weiss, Erich, W-6800 Mannheim 31 (DE); Simon, Thomas, W-6842 Bürstadt (DE); Elste, Kurt-Lutz, W-6106 Erzhausen (DE)
(74) Vertreter: Pfeifer, Hans-Peter, Dr., Dr. H.-P. Pfeifer Dr. P. Jany, Patentanwälte

(56) Entgegenhaltungen:
- WO-A-83/00932
- US-A- 2 776 076

## Beschreibung

Die Erfindung betrifft ein Reagenzbevorratungssystem für ein medizinisches Analysegerät.

Medizinische Analysegeräte im Sinne der vorliegenden Erfindung dienen dazu, Körperflüssigkeiten, insbesondere Blut zu untersuchen. Moderne Geräte dieser Art arbeiten weitgehend vollautomatisch, wobei nur noch die Proben in entsprechenden Probenbehältern eingesetzt und die gewünschten Analysen eingegeben werden müssen.

Die Erfindung richtet sich auf Geräte, die mit flüssigen Reagenzien arbeiten, die sich in Reagenzbehältern aus Kunststoff befinden. Die Geräte weisen meist einen gekühlten Reagenzraum auf. Von den Reagenzbehältern werden die Reagenzien in dem Gerät zur Reaktionsgefäßen transportiert, dort mit der Probe gemischt und nach Ablauf der Reaktion wird eine physikalisch nachweisbare Veränderung (meistens eine Farbbildung) als Maß für die Analyse gemessen. Häufig sind die Reagenzbehälter speziell an den Reagenzraum eines bestimmten Gerätes angepaßt. Dadurch ist eine besonders platzsparende Unterbringung und effektive Kühlung der Reagenzien möglich. Reagenzbehälter und der zugehörige geräteseitige Reagenzraum bilden, wenn sie funktional gegenseitig angepaßt sind, ein System, welches hier als Reagenzbevorratungssystem bezeichnet wird.

Für den Transport der Reagenzien aus dem Reagenzbehälter in das Reaktionsgefäß werden im wesentlichen zwei grundsätzlich verschiedene Techniken angewendet, nämlich die Pipettiertechnik und die Dispensertechnik.

Bei der Pipettiertechnik taucht eine meist an einem beweglichen Arm befestigte Pipette von oben durch das offene Ragenzgefäß ein, eine entsprechende Reagenzmenge wird angesaugt und in der Pipette (die auch als Transfernadel bezeichnet wird) in den Reaktionsbehälter tranferiert. Diese Technik ermöglicht es, die Reagenzbehälter auf einfache Weise auszuwechseln. Es ist jedoch eine aufwendige Gerätemechanik erforderlich. Außerdem ist der Reagenzientransfer relativ langsam, wodurch die Durchsatzleistung des Gerätes beschränkt ist.

Bei der Dispensertechnik sind die Reagenzbehälter permanent über jeweils eine Leitung an das Gerät angeschlossen. Die Anschlußleitungen sind Bestandteil eines Leitungssystems, durch das die Reagenzien in geeigneter Weise (welche für die vorliegende Erfindung ohne Bedeutung ist) den Reaktionsgefäßen und damit der Analyse zugeführt werden. Dadurch stehen sie mit relativ geringem mechanischen Aufwand jederzeit zur Verfügung. Dies erlaubt hohe Analysefrequenzen und damit sehr schnell arbeitende Analyseautomaten.

Hinsichtlich der Handhabung weist die Dispensertechnik jedoch erhebliche Nachteile auf. Üblicherweise werden in die Reagenzbehälter von oben her Anschlußschläuche derartig eingeführt, daß sie kurz über dem Behälterboden enden. Dies ist schwierig und kann leicht zu Fehlern führen. Insbesondere kann es vorkommen, daß Luft angesaugt wird, wenn die Schläuche nicht tief genug in das Reagenz eintauchen. Außerdem müssen die Schläuche beim Auswechseln jeweils in Reinigungsflüssigkeit geschwenkt werden, um eine Übertragung von Reagenz zu verhindern, insbesondere soweit - wie vielfach üblich - an dem gleichen Kanal des Gerätes verschiedene Reaktionen durchgeführt und demzufolge durch einen Schlauch verschiedene Reagenzien geleitet werden.

Mit dem Ziel, die Handhabung des Gerätes, insbesondere beim Auswechseln der Reagenzbehälter, zu vereinfachen, wird erfindungsgemäß ein Reagenzbevorratungssystem gemäß Anspruch 1 vorgeschlagen.

Durchstechdichtungen sind für andere Anwendungszwecke, beispielsweise Infusionsgefäße oder implantierbare Gefäßanschlüsse (sogenannte "Ports") bekannt. Der Verwendung dieser Technik bei Reagenzbevorratungssystem medizinischer Analysegeräte standen jedoch die auf diesem Gebiet zu beachtenden besonderen Anforderungen entgegen, die durch die vorliegende Erfindung überwunden worden sind. Hierzu gehören insbesondere folgende Punkte.
- Die Reagenzien werden in den Reagenzbehältern über sehr lange Zeit (teilweise mehrere Jahre) gelagert. Sie enthalten zum Teil sehr reaktionsfreudige chemische Bestandteile, die von Umwelteinflüssen während der Lagerung vollständig frei sein müssen und die zahlreiche Materialien angreifen.
- Viele der in der medizinischen Analytik verwendeten Reagenzien sind sehr teuer. Jedes Anschlußsystem muß deshalb so gestaltet sein, daß ein möglichst geringes Restvolumen in dem Behälter bleibt.
- Die Analysegeräte sollen nach Möglichkeit auch von weniger gut geschultem Personal bedient werden können, wobei darunter die Qualität der Analyse nicht leiden darf.
- Der Reagenzraum wird gekühlt, wobei Temperaturen im Bereich der Wände von 2 bis 3°C nicht ungewöhnlich sind.

Die WO 83/00932 beschreibt ein Reagenzien-Lager- und Zufuhrsystem, bei dem eine durchstechbare Septum-Dichtung für die Verbindung der Reagenzbehälter mit dem Leitungssystem des Geräts verwendet wird. Dabei wird die bei Infusionsflaschen übliche Konstruktion verwendet. Die Behälter sind flaschenförmig geformt und haben einen Flaschenhals, in den das Septum eingesteckt ist. Zum Anschluß an das Leitungssystem des Gerätes werden die Flaschen um 180° gedreht und mit dem Hals nach unten in eine Halterung eingeschraubt, in der passende Schraubkappen und senkrecht verlaufende Durchstechnadeln vorgesehen sind. Die bei der Entleerung der Flaschen erforderliche Luftzufuhr wird durch eine Ventilöffnung am Boden der Flasche gewährleistet, die durch Abreißen eines Kunststoffteils geöffnet wird. Infolge dieser permanenten Öffnung am Boden können die Flaschen nach der ersten Benutzung nicht mehr in ihrer Normalposition zwischengelagert werden. Zur Zwischenlagerung ist deshalb eine spezielle Halterung erforderlich, in der die Flaschen mit dem Hals nach unten gehalten werden.

Die genannten Anforderungen werden im Rahmen der Erfindung besonders gut erfüllt, wenn die im folgenden beschriebenen besonders bevorzugten Maßnahmen einzeln oder in Kombination miteinander verwendet werden.

Im Hinblick auf die Lagerbeständigkeit der Reagenzien erweist es sich als besonders vorteilhaft, wenn der Reagenzbehälter aus Kunststoff im Bereich der Durchstechdichtung eine ununterbrochene Wandung hat, welche gemeinsam mit der Durchstechdichtung von der Hohlnadel durchstochen wird. Die Durchstechdichtung befindet sich deshalb vorzugsweise in einem zum Innenraum des Reagenzbehälters hin geschlossenen Sackloch. In diesem Zusammenhang ist es vorteilhaft, wenn die Hohlnadel nicht - wie sonst üblich - vorne schräg angeschliffen ist, sondern eine geschlossene Spitze und hinter der Spitze eine seitliche Öffnung aufweist. Dadurch wird das Eindringen des herausgestochenen Teils der Behälterwand in die Hohlnadel zuverlässig verhindert. Als besonders geeignetes reagenzienbeständiges Material für die Hohlnadel hat sich Titan erwiesen.

Im Hinblick auf ein möglichst kleines Restvolumen an Reagenz (Totvolumen) ist es wesentlich, daß die Hohlnadel in der Nähe des Bodens des Reagenzbehälterfaches verläuft. Entsprechend ist an dem Behälter der Abstand zwischen der Mittelachse der Durchstechdichtung und dem Reagenzbehälterboden vorzugsweise kleiner als 1 cm. Dies wiederum bedingt einen kleinen Durchmesser des Durchstechstopfens von vorzugsweise weniger als 1 cm. Um bei einem solchen kleinen Durchmesser eine zuverlässige Dichtung zu erreichen, wird gemäß einer weiteren bevorzugten Ausführungsform ein ungewöhnlich weiches Elastomer mit einer Shorehärte von weniger als 50 für den Durchstechstopfen verwendet. Dieser sollte relativ lang ausgebildet sein, wobei besonders bevorzugt ein zylindrischer Kolbenstopfen ist, dessen Länge größer als sein Durchmesser ist.

Im Hinblick auf die einfache Bedienung ist wesentlich, daß das Reagenzbehälterfach so ausgebildet ist, daß die Reagenzbehälter beim Einstechen der Hohlnadel in die Durchstechdichtung allseitig geführt sind, so daß die Spitze der Hohlnadel exakt in das Zentrum der Durchstechdichtung trifft. Hierzu dienen die seitlichen und oberen Führungselemente des Reagenzbehälterfaches in Verbindung mit dessen Boden. Ein stirnseitiger Anschlag, welcher gegebenenfalls auch an der Hohlnadel selbst vorgesehen sein kann, begrenzt die Einstechbewegung. Eine derartige allseitige Führung wird bei einigen bekannten Geräten bereits verwendet, um die Reagenzbehälter zu positionieren. Der Fachmann kann hieraus jedoch keinerlei Hinweise auf die Möglichkeit zur Verwendung einer Durchstechdichtung entnehmen.

Die Erfindung und weitere bevorzugte Ausführungsformen werden im folgenden anhand eines in den Figuren schematisch dargestellten Ausführungsbeispiels näher erläutert; es zeigen:
- Fig. 1: Ein erfindungsgemäßes Reagenzbevorratungssystem in perspektivischer Darstellung;
- Fig. 2: ein Reagenzbevorratungssystem entsprechend Fig. 1, jedoch mit abgenommenen oberen Führungselementen in Aufsicht,
- Fig. 3: eine Seitenansicht des Systems (teilweise im Schnitt), wobei sich ein Reagenzbehälter in einer Position kurz vor dem Einstechen der Hohlnadel befindet;
- Fig. 4: eine Detaildarstellung der Hohlnadel und der Durchstechdichtung im Schnitt.

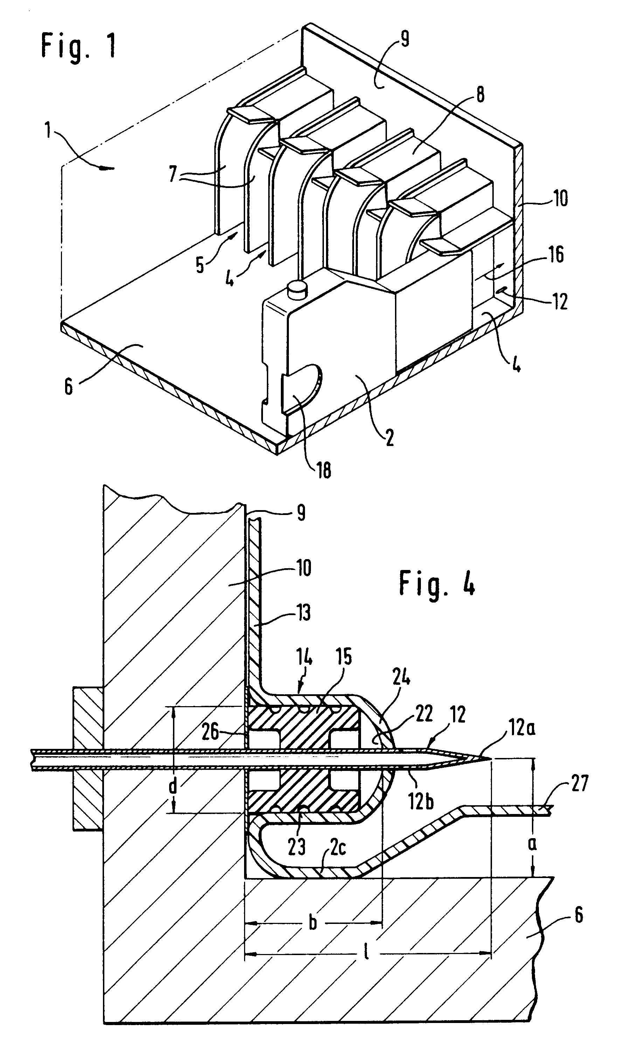

Das in den Figuren 1 bis 3 dargestellte Reagenzbevorratungssystem besteht aus einem Reagenzraum 1, welcher Bestandteil eines nicht dargestellten Analysegerätes ist und Reagenzbehältern 2,3 die im vorliegenden Fall für zwei verschiedene Reagenzvolumina von beispielsweise 300 bzw. 600 ml bestimmt sind und deswegen eine verschiedene Breite haben. Entsprechend enthält der Reagenzraum zwei verschiedene Typen von Reagenzbehälterfächern 4 bzw. 5, die jeweils einen Boden, seitliche und obere Führungselemente und einen stirnseitigen Anschlag haben. Im dargestellten Fall ist ein für alle Fächer gemeinsame Reagenzraumboden 6 vorgesehen. Als seitliche Führungselemente dienen Trennwände 7. Die oberen Führungselemente werden von an den Trennwänden 7 befestigten Winkelblechen 8 gebildet. Als Anschlag an der Stirnseite 9 der Reagenzbehälterfächer 4,5 dient die Rückwand 10 des Reagenzraums 1.

An der Stirnseite 9 jedes Reagenzbehälterfaches ist in der Nähe des Bodens 6 eine Hohlnadel 12 vorgesehen, welche parallel zu dem Boden 6 verläuft. Die Reagenzbehälter 2,3 weisen in ihrer Stirnwand 13 jeweils eine insgesamt mit 14 bezeichnete Durchstechdichtung mit einem gummielastischem Durchstechstopfen 15 auf.

Ein Reagenzbehälter 2 wird in das zugehörige Reagenzbehälterfach in Richtung senkrecht auf die Stirnseite 9 (Pfeil 16) eingeschoben. Dabei wird er auf dem letzten Teilstück der Einführungsbewegung von dem Boden 6 und den seitlichen und oberen Führungselementen 7,8 so geführt, daß exakt das Zentrum der Durchstechdichtung 14 auf die Spitze 12a der Hohlnadel 12 trifft. Den Anschlag in Einführrichtung 16 bildet im dargestellten Fall die Rückwand 10 des Reagenzraumes. Die Länge L, auf der die Reagenzbehälter 2,3 bei der Einführung in Richtung des Pfeiles 16 geführt werden, muß größer sein als die effektive Länge 1, um die die Hohlnadeln 12 (bezogen auf den Anschlag 9) in den Reagenzraum 1 hineinragen.

Die Reagenzbehälter 2,3 sind bevorzugt langgestreckt ausgebildet, wobei ihre Länge mindestens fünfmal so große wie ihre Breite ist. Dies ermöglicht nicht nur eine platzsparende Unterbringung, sondern reduziert auch das Totvolumen im Bereich der Hohlnadel 12.

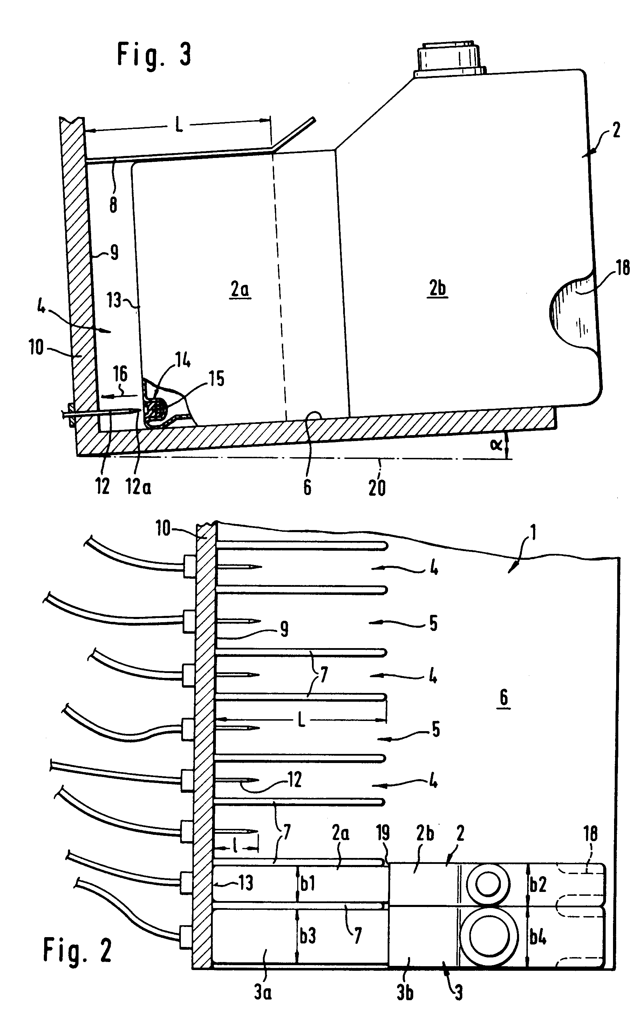

Besonders bevorzugt ist die in den Figuren dargestellte Formgebung, bei der die Behälter in einem ersten vorderen Behälterteil 2a, 3a, welcher sich an die Stirnwand 13 anschließt, eine geringere Breite b1, b3 haben, als in einem zweiten, hinteren Behälterteil 2b, 3b (Breite b2, b4 Fig. 2). Dabei ist die Breite b1, b3 in dem vorderen Behälterteil 2a, 3a vorzugsweise um soviel geringer, wie für die seitlichen Führungselemente (seitliche Trennwände 7) an Platz benötigt wird. Allgemein gesprochen ist die Breite b2, b4 der Behälter in dem zweiten hinteren Behälterteil 2b, 3b auf den Abstand der (unmittelbar nebeneinander angeordneten) Reagenzbehälterfächer 4,5 so abgestimmt, daß der hintere Behälterteil 2b, 3b benachbarter Reagenzbehälter 2,3 unmittelbar aneinander anliegt. Dabei sind an dem hinteren Behälterteil 2b, 3b zum Inneraum hin eingeformte Griffmulden 18 vorgesehen. Hierdurch wird eine optimal platzsparende Anordnung und gute Kühlung erreicht. Sowohl der vordere Behälterteil 2a, 3a als auch der hintere Behälterteil 2b, 3b haben vorzugsweise, wie dargestellt, eine im wesentlichen rechteckige Grundfläche, wobei sich die Breite an einer Übergangsstelle 19 erweitert.

Bevorzugt ist, wie in Fig. 3 dargestellt, der Boden 6 der Reagenzfächer 4,5 gegenüber der horizontalen (gestrichelte Linie 20) um einen Winkel α, der etwa 2°- 5° betragen sollte, zu der Stirnseite 9 hin geneigt. Auch diese Maßnahme trägt wesentlich zur Reduzierung des Totvolumens bei.

Figur 4 zeigt Einzelheiten der bevorzugten Konstruktion der Durchstechdichtung 14, der Behälterwandung 2c im Bereich der Durchstechdichtung und der Hohlnadel 12. Man erkennt, daß als Aufnahme für den Durchstechstopfen 15 in der Stirnwand 13 des Behälters 2 ein Sackloch 22 vorgesehen ist, welches zylindrische Seitenflächen 23 und einen Boden 24 hat. Um eine ausreichend große gleichmäßige Wandstärke zu gewährleisten ist es vorteilhaft, wenn der Boden 24 wie dargestellt zum Innenraum des Reagenzbehälters 2 hin gewölbt ist und glattflächig in die Seitenflächen 23 des Sacklochs 22 übergeht. Die Spitze 12a der Hohlnadel 12 ist kegelförmig und geschlossen. Zum Ansaugen der Reagenzflüssigkeit ist hinter der Spitze eine seitliche Öffnung 12b vorgesehen.

Der im dargestellten Fall als Kolbenstopfen ausgebildete Durchstechstopfen 15 wird von einer Deckfolie 26 überspannt, welche im Bereich der Durchstechdichtung 14 an der Stirnwand 13 des Reagenzbehälters 2 festgeschweißt ist. Dadurch wird der Stopfen 15 gegen Herausrutschen beim Herausnehmen des Behälters 2 gesichert. Außerdem bildet die Deckfolie 26 eine zusätzliche Abdichtung. Überraschenderweise kann der gleiche Reagenzbehälter 2,3 mehrfach auf die Hohlnadel 12 gesteckt und wieder abgenommen werden, ohne daß die Durchstechdichtung undicht wird.

Die Wand 2c des Behälters 2 ist im Bereich des Behälterbodens 27 zum Inneraum des Behälters 2 hin eingezogen. Auch hierdurch wird das Totvolumen vermindert.

Insgesamt ist es durch Kombination der beschriebenen Maßnahmen möglich, das Totvolumen in dem Behälter 2 auf weniger als 5 ml zu begrenzen. Um dies zu gewährleisten, ist eine verhältnismäßig komplizierte Behälterform, wie sie in Fig. 4 dargestellt ist, erforderlich. Überraschenderweise hat sich jedoch ergeben, daß eine solche Behälterform sich in einem Extrusions-Blasverfahren rationell und kostengünstig aus HDPE (high density polyethylen) herstellen läßt. Dabei hat die bevorzugte Ausführungsform folgende Abmessungen:

Abstand a zwischen Behälterunterseite 27 und Zentrum der
Durchstechdichtung 14: 8 mm
Tiefe b des Sacklochs: 9,5 mm
Durchmesser d des Sacklochs: 7 mm
Effektive Länge 1 der Nadel: ca 17 mm.

## Patentansprüche

1. Reagenzbevorratungssystem für ein medizinisches Analysegerät
bestehend aus einem an dem Gerät vorgesehenen Reagenzraum (1) und an den Reagenzraum angepaßten Reagenzbehältern (2,3),
wobei das Gerät ein Leitungssystem mit einem Anschluß für einen in dem Reagenzbehälterfach (1) befindlichen Reagenzbehälter (2) aufweist, durch das ein darin enthaltenes Reagenz entnommen und der Analyse zugeführt wird,
bei welchem
in dem Reagenzraum (1) mindestens ein Reagenzbehälterfach (4) mit einem Boden (6), sowie seitlichen und oberen Führungselementen (7,8) vorgesehen ist, so daß ein in das Reagenzbehälterfach eingeführter Reagenzbehälter bei der Einführbewegung in Richtung auf die Stirnseite des Behälterfaches allseitig geführt wird,
an der Stirnseite (9) des Reagenzbehälterfachs (4) eine in der Nähe des Bodens (6) parallel zu diesem verlaufende Hohlnadel (12) angeordnet ist und
der Reagenzbehälter (2) an seiner der Stirnseite (9) Zugewandten Stirnwand (13) eine Durchstechdichtung (14) mit einem gummielastischen Durchstechstopfen (15) aufweist.

2. Reagenzbevorratungssystem nach Anspruch 1, bei welchem die Aufnahme für den Durchstechstopfen (15) in dem Reagenzbehälter (2) als zu dessen Innenraum hin geschlossenes Sackloch (22) ausgebildet ist.

3. Reagenzbevorratungssystem nach Anspruch 2, bei welchem der Boden (24) des Sacklochs (22) zum Innenraum des Reagenzbehälters hin gewölbt ist und glattflächig in die Seitenfläche (23) des Sacklochs (22) übergeht.

4. Reagenzbevorratungssystem nach einem der vorhergehenden Ansprüche, bei welchem der Abstand der Mittelachse der Durchstechdichtung (14) von dem Reagenzbehälterboden (27) kleiner als 1 cm ist.

5. Reagenzbevorratungssystem nach einem der vorhergehenden Ansprüche, bei welchem der Durchstechstopfen (15) einen Durchmesser von weniger als 1 cm hat.

6. Reagenzbevorratungssystem nach einem der vorhergehenden Ansprüche, bei welchem der Durchstechstopfen (15) aus einem Elastomer mit einer Shorehärte von weniger als 50 besteht.

7. Reagenzbevorratungssystem nach einem der vorhergehenden Ansprüche, bei welchem der Durchstechstopfen (15) als zylindrischer Kolbenstopfen ausgebildet ist, dessen Länge größer als sein Durchmesser ist.

8. Reagenzbevorratungssystem nach einem der vorhergehenden Ansprüche, bei welchem an der Stirnwand (13) des Reagenzbehälters im Bereich der Durchstechdichtung (14) eine den Durchstechstopfen (15) überspannende Deckfolie (26) befestigt, vorzugsweise festgeschweißt, ist.

9. Reagenzbevorratungssystem nach einem der vorhergehenden Ansprüche, bei welchem der Boden (27) des Reagenzbehälters (2) zu deren Innenraum hin eingezogen ist.

10. Reagenzbevorratungssystem nach einem der vorhergehenden Ansprüche, bei welchem der Reagenzbehälter (2) langgestreckt ausgebildet ist, wobei seine Länge mindestens 5 mal so groß wie seine Breite ist.

11. Reagenzbevorratungssystem nach Anspruch 10, bei welchem
der Reagenzraum (1) mehrere unmittelbar nebeneinander angeordnete Reagenzbehälterfächer (4,5) zur Aufnahme mehrerer Behälter (2,3) aufweist,
die Breite (b1,b3) der Behälter (2,3) in einem ersten vorderen Behälterteil (2a,3a), welcher sich an die Stirnwand (13) mit der Durchstechdichtung (14) anschließt, geringer ist, als in einem zweiten hinteren Behälterteil (2b,3b) und
die Breite der Behälter (b2,b4) in dem zweiten hinteren Behälterteil (2b,3b) auf den Abstand der Reagenzbehälterfächer (4,5) so abgestimmt ist, daß der hintere Behälterteil (2b,3b) benachbarter Reagenzbehälter (2,3) unmittelbar aneinander anliegt und
an dem hinteren Behälterteil (2b,3b) ein Griff (18) vorgesehen ist.

12. Reagenzbevorratungssystem nach einem der vorhergehenden Ansprüche, bei welchem die Hohlnadel (12) eine geschlossene Spitze (12a) und hinter der Spitze eine seitliche Öffnung (12b) hat.

13. Reagenzbevorratungssystem nach einem der vorhergehenden Ansprüche bei welchem die Hohlnadel (12) aus Titan besteht.

14. Reagenzbevorratungssystem nach einem der vorhergehenden Ansprüche, bei welchem der Boden (6) des Reagenzbehälterfaches zu der Stirnseite hin geneigt ist (Winkel α).

## Claims

1. Reagent supply system for a medical analytical device
consisting of a reagent chamber (1) provided on the device and reagent containers (2, 3) adapted to the reagent chamber,
whereby the device exhibits a system of ducts with a connection for a reagent container (2) located in the reagent-container compartment (1), by means of which system of ducts a reagent contained therein can be withdrawn and passed for analysis,
in which
at least one reagent-container compartment (4) with a bottom (6), and also lateral and upper guide elements (7, 8) are provided in the reagent chamber (1), so that a reagent container inserted into the reagent-container compartment is guided on all sides in the course of the insertion movement in the direction of the front end of the container compartment,
at the front end (9) of the reagent-container compartment (4) a hollow needle (12) is arranged near the bottom (6) running parallel to the latter and
the reagent container (2) exhibits on its front wall (13) facing the front end (9) a pierceable seal (14) with a rubber-elastic pierceable stopper (15).

2. Reagent supply system according to Claim 1, in which the socket for the pierceable stopper (15) is formed in the reagent container (2) as a blind hole (22) which is closed towards the interior of said reagent container.

3. Reagent supply system according to Claim 2, in which the bottom (24) of the blind hole (22) is domed in the direction of the interior of the reagent container and merges with a smooth surface into the side face (23) of the blind hole (22).

4. Reagent supply system according to one of the preceding claims, in which the spacing of the central axis of the pierceable seal (14) from the bottom (27) of the reagent container is less than 1 cm.

5. Reagent supply system according to one of the preceding claims, in which the pierceable stopper (15) has a diameter of less than 1 cm.

6. Reagent supply system according to one of the preceding claims, in which the pierceable stopper (15) consists of an elastomer with a Shore hardness of less than 50.

7. Reagent supply system according to one of the preceding claims, in which the pierceable stopper (15) takes the form of a cylindrical flask stopper, the length of which is greater than its diameter.

8. Reagent supply system according to one of the preceding claims, in which on the front wall (13) of the reagent container in the region of the pierceable seal (14) there is fastened, preferably firmly welded, a covering foil (26) spanning the pierceable stopper (15).

9. Reagent supply system according to one of the preceding claims, in which the bottom (27) of the reagent container (2) is drawn inwards towards the interior thereof.

10. Reagent supply system according to one of the preceding claims, in which the reagent container (2) is elongated in shape, its length being at least 5 times as great as its width.

11. Reagent supply system according to Claim 10, in which the reagent chamber (1) exhibits several reagent-container compartments (4, 5) arranged directly side by side for receiving several containers (2, 3),
the widths (b1, b3) of the containers (2, 3) in a first, front container section (2a, 3a) which adjoins the front wall (13) with the pierceable seal (14) are smaller than in a second, rear container section (2b, 3b) and
the widths of the containers (b2, b4) in the second, rear container section (2b, 3b) are adapted to the spacing of the reagent-container compartments (4, 5) in such a way that the rear container sections (2b, 3b) of adjacent reagent containers (2, 3) are in direct contact with each other and
a grip (18) is provided on the rear container section (2b, 3b).

12. Reagent supply system according to one of the preceding claims, in which the hollow needle (12) has a closed point (12a) and a lateral opening (12b) behind the point.

13. Reagent supply system according to one of the preceding claims, in which the hollow needle (12) consists of titanium.

14. Reagent supply system according to one of the preceding claims, in which the bottom (6) of the reagent-container compartment is inclined in the direction of the front end (angle α).

## Revendications

1. Système d'alimentation de réactifs pour un dispositif d'analyse médical,
constitué par un espace à réactifs (1) prévu dans le dispositif et des conteneurs de réactif (2,3) adaptés à l'espace à réactifs,
dans lequel le dispositif présente un système de conduit avec un raccord pour un conteneur de réactif (2) se trouvant dans le compartiment à conteneurs de réactif (1), à travers lequel un réactif contenu dans cet espace est prélevé et amené à l'analyse,
dans lequel
il est prévu, à l'intérieur de l'espace à réactifs (1), au moins un compartiment à conteneurs de réactif (4) muni d'un fond (6), ainsi que des éléments de guidage latéraux et supérieurs (7,8), de sorte qu'un conteneur de réactif introduit dans le compartiment à conteneurs de réactif est guidé de tous les côtés, pendant l'introduction, en direction de la face frontale du compartiment à conteneurs,
sur la face frontale (9) du compartiment à conteneurs de réactif (4) est disposée une aiguille creuse (12) s'étendant au voisinage du fond (6) parallèlement à celui-ci, et
le conteneur de réactif (2) présente, sur sa paroi frontale (13) tournée vers la face frontale (9), une garniture étanche à transpercer (14), munie d'un bouchon à transpercer (15) de type caoutchouc.

2. Système d'alimentation de réactifs selon la revendication 1, dans lequel le bouchon à transpercer (15) est disposé à l'intérieur du conteneur de réactif (2) dans un trou borgne (22) fermé vers son volume intérieur.

3. Système d'alimentation de réactifs selon la revendication 2, dans lequel le fond (24) du trou borgne (22) est concave dans le sens tourné vers l'espace intérieur du conteneur de réactif et la face latérale (23) du trou borgne (22) présente une forme plane.

4. Système d'alimentation de réactifs selon l'une quelconque des revendications précédentes, dans lequel la distance entre l'axe médian de la garniture à transpercer (14) et le fond (27) du conteneur de réactif est inférieure à 1 cm.

5. Système d'alimentation de réactifs selon l'une quelconque des revendications précédentes, dans lequel le bouchon à transpercer (15) présente un diamètre inférieur à 1 cm.

6. Système d'alimentation de réactifs selon l'une quelconque des revendications précédentes, dans lequel le bouchon à transpercer (15) est constitué d'un élastomère ayant une dureté Shore inférieure à 50.

7. Système d'alimentation de réactifs selon l'une quelconque des revendications précédentes, dans lequel le bouchon à transpercer (15) est conçu sous la forme d'un bouchon de piston cylindrique, dont la longueur est supérieure à son diamètre.

8. Système d'alimentation de réactifs selon l'une quelconque des revendications précédentes, dans lequel, sur la paroi frontale (13) du conteneur de réactif, au voisinage de la garniture à transpercer (14), se trouve fixée, de préférence soudée, une feuille de couverture (26) tendue au-dessus du bouchon à transpercer (15).

9. Système d'alimentation de réactifs selon l'une quelconque des revendications précédentes, dans lequel le fond (27) du conteneur de réactif (2) est replié vers l'espace intérieur de celui-ci.

10. Système d'alimentation de réactifs selon l'une quelconque des revendications précédentes, dans lequel le conteneur de réactif (2) est conçu sous forme longitudinale, sa longueur étant au moins 5 fois supérieure à sa largeur.

11. Système d'alimentation de réactifs selon la revendication 10, dans lequel
l'espace à réactifs (1) présente plusieurs compartiments à conteneur de réactif (4,5), disposés de façon immédiatement adjacente, destinés à recevoir plusieurs conteneurs (2,3),
la largeur (b1, b3) du conteneur (2,3) dans une première partie avant (2a, 3a) du conteneur, qui se raccorde à la paroi frontale (13) munie de la garniture à transpercer (14), est inférieure à celle d'une seconde partie arrière (2b, 3b) du conteneur, et
la largeur (b2, b4) du conteneur dans une seconde partie arrière (2b, 3b) du conteneur est adaptée à l'espacement du compartiment à conteneurs de réactif (4,5) de telle façon que le conteneur de réactif (2,3) voisin de la partie arrière (2b, 3b) du conteneur est directement superposé à celle-ci, et
sur la partie arrière (2b,3b) du conteneur, il est prévu une poignée (18).

12. Système d'alimentation de réactifs selon l'une quelconque des revendications précédentes, dans lequel l'aiguille creuse (12) présente une pointe fermée (12a) et derrière la pointe, un orifice latéral (12b).

13. Système d'alimentation de réactifs selon l'une quelconque des revendications précédentes, dans lequel l'aiguille creuse (12) est en titane.

14. Système d'alimentation de réactifs selon l'une quelconque des revendications précédentes, dans lequel le fond (6) du compartiment à conteneurs de réactif est incliné (angle α) vers la face frontale.
